# EUROPEAN PATENT APPLICATION

(11) **EP 4 831 542 A1**
(43) Date of publication of application: **28.10.2026**
(21) Application number: 24906908.9
(22) Date of filing: 23.10.2024
(51) Int. Cl.: F24C 15/10, C03C 17/42, H05B 6/12

(54) **COOKER TOP PLATE AND MANUFACTURING METHOD FOR COOKER TOP PLATE**

(30) Priority: 19.12.2023 JP 2023213626
(71) Applicant: Nippon Electric Glass Co., Ltd., Otsu-shi, Shiga 520-8639 (JP)
(72) Inventor: YAMAMOTO, Takefumi, Otsu-shi, Shiga 520-8639 (JP)
(74) Representative: Tetzner, Michael
(86) International application number: PCT/JP2024/037682
(87) International publication number: WO 2025/134520

(57) **Abstract**

Provided is a cooker top plate that can obtain excellent thermal resistance and coating hardness while maintaining a suitable light transmissiveness of a transmissive portion thereof that transmits light from a light source. A cooker top plate 1 including a transmissive portion D1 transmitting light from a light source 10 includes: a glass substrate 2 having a cooking surface 2a on which a cooking utensil is to be put and a back surface 2b on an opposite side to the cooking surface 2a; and a semi-light transmissive layer 3 disposed on or adjacent the back surface 2b of the glass substrate 2, wherein the semi-light transmissive layer 3 is provided in the transmissive portion D1, and the semi-light transmissive layer 3 contains a silicone resin, a color pigment, and transparent fine particles.

## Description

### [Technical Field]

The present invention relates to cooker top plates and methods for manufacturing cooker top plates.

### [Background Art]

Cookers including a cooker top plate and a light source, such as an LED (light emitting diode), are widely used. The cooker top plate for use in combination with a light source generally includes: a transmissive portion that transmits light from the light source; and a non-transmissive portion that shields light from the light source. The user of the cooker can visually recognize, through light having been emitted from the light source and having passed through the transmissive portion, luminous signs (various information) representing, for example, a power-on or -off state and a heating state.

Patent Literature 1 below discloses a cooker top plate including a glass substrate having: a cooking surface on which a cooking utensil is to be put; and a back surface on an opposite side to the cooking surface, wherein the cooker top plate is provided with: a transmissive portion that transmits light from a light source; and a non-transmissive portion that shields light from the light source. In this cooker top plate, the transmissive portion includes a first colored layer provided on the back surface of the glass substrate and the non-transmissive portion includes a light-shielding layer provided on the back surface of the glass substrate. Furthermore, Patent Literature 1 describes that the first colored layer provided in the transmissive portion may contain a silicone resin and a color pigment.

### [Citation List]

### [Patent Literature]

[PTL 1]
JP-A-2020-186905

### [Summary of Invention]

### [Technical Problem]

As in Patent Literature 1, in some kinds of cooker top plates, the transmissive portion includes a resin layer containing a silicone resin and a color pigment and disposed on the back surface of the glass substrate. In the resin layer, the light transmittance of the resin layer can be adjusted, for example, by adjusting the content of the color pigment, to make the interior of the cooker invisible through the transmissive portion upon turn-off of the light source and allow the transmissive portion to transmit light from the light source upon turn-on of the light source.

However, such a conventional resin layer provided in a transmissive portion and containing a silicone resin and a color pigment has a high content of silicone resin and therefore cannot sufficiently increase the thermal resistance and coating hardness of the resin layer. Specifically, if the amount of color pigment is increased for the purpose of increasing the thermal resistance and coating hardness of the resin layer, the light transmissiveness of the resin layer decreases. Therefore, the resin layer has difficulty in obtaining excellent thermal resistance and coating hardness while maintaining a suitable light transmittance.

An object of the present invention is to provide: a cooker top plate that can obtain excellent thermal resistance and coating hardness while maintaining a suitable light transmissiveness of a transmissive portion thereof that transmits light from a light source; and a method for manufacturing the cooker top plate.

### [Solution to Problem]

Hereinafter, a description will be given of aspects of a cooker top plate and aspects of a method for manufacturing a cooker top plate as solutions to the above problems.

A cooker top plate of aspect 1 in the present invention is a cooker top plate including a transmissive portion transmitting light from a light source and includes: a glass substrate having a cooking surface on which a cooking utensil is to be put and a back surface on an opposite side to the cooking surface; and a semi-light transmissive layer disposed on or adjacent the back surface of the glass substrate, wherein the semi-light transmissive layer is provided in the transmissive portion, and the semi-light transmissive layer contains a silicone resin, a color pigment, and transparent fine particles.

A cooker top plate of aspect 2 is the cooker top plate according to aspect 1, wherein the transparent fine particles preferably have an average particle diameter of not more than 0.1 µm.

A cooker top plate of aspect 3 is the cooker top plate according to aspect 1 or 2, wherein the transparent fine particles preferably contain barium sulfate.

A cooker top plate of aspect 4 is the cooker top plate according to aspect 3, wherein a content of the barium sulfate is preferably not less than 43% by mass and not more than 60% by mass in 100% by mass of the semi-light transmissive layer.

A cooker top plate of aspect 5 is the cooker top plate according to aspect 3 or 4, wherein a content ratio of the barium sulfate to the silicone resin ((barium sulfate)/(silicone resin)) is preferably not less than 0.9 and not more than 2 in terms of mass ratio.

A cooker top plate of aspect 6 is the cooker top plate according to any one of aspects 1 to 5, wherein the cooker top plate may include a non-transmissive portion that shields light from the light source and further include a light-shielding layer disposed on or adjacent the back surface of the glass substrate and at a location overlapped with the non-transmissive portion in plan view.

A cooker top plate of aspect 7 is the cooker top plate according to any one of aspects 1 to 6, wherein the cooker top plate preferably has an L* value of not more than 30 in a L*a*b* color system when placed, with the back surface side as a bottom surface, on a black sheet and measured at the transmissive portion from the cooking surface side.

A method for manufacturing a cooker top plate of aspect 8 in the present invention is a method for manufacturing a cooker top plate including a transmissive portion transmitting light from a light source and includes the steps of: preparing a glass substrate having a cooking surface on which a cooking utensil is to be put and a back surface on an opposite side to the cooking surface; applying a paste for forming a semi-light transmissive layer to or adjacent a portion of the back surface of the glass substrate where the transmissive portion is to be formed; and firing the glass substrate to or adjacent which the paste for forming the semi-light transmissive layer is applied, wherein the paste for forming the semi-light transmissive layer contains a silicone resin, a color pigment, and transparent fine particles.

A method for manufacturing a cooker top plate of aspect 9 is the method for manufacturing a cooker top plate according to aspect 8, wherein the transparent fine particles preferably contain barium sulfate.

### [Advantageous Effects of Invention]

The present invention enables provision of: a cooker top plate that can obtain excellent thermal resistance and coating hardness while maintaining a suitable light transmissiveness of a transmissive portion thereof that transmits light from a light source; and a method for manufacturing the cooker top plate.

### [Brief Description of Drawings]

[Fig. 1]

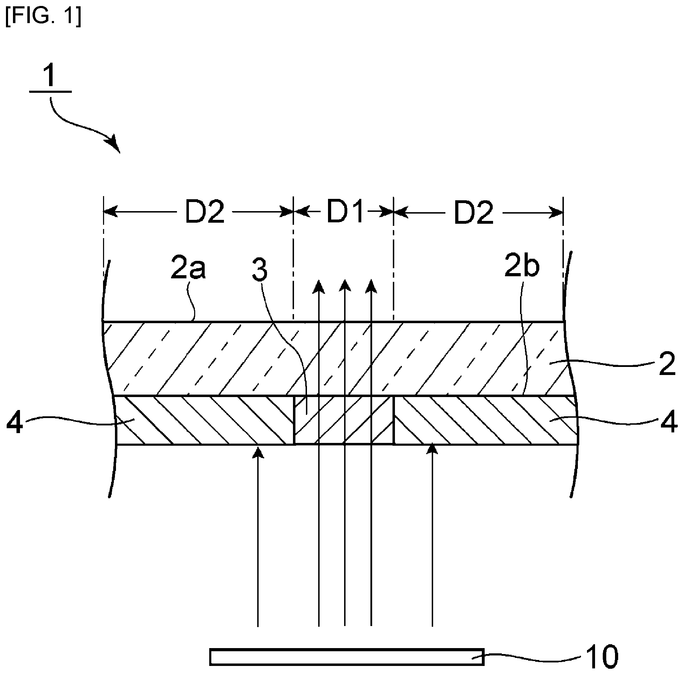

   Fig. 1 is a schematic cross-sectional view showing a cooker top plate according to a first embodiment of the present invention.
[Fig. 2]

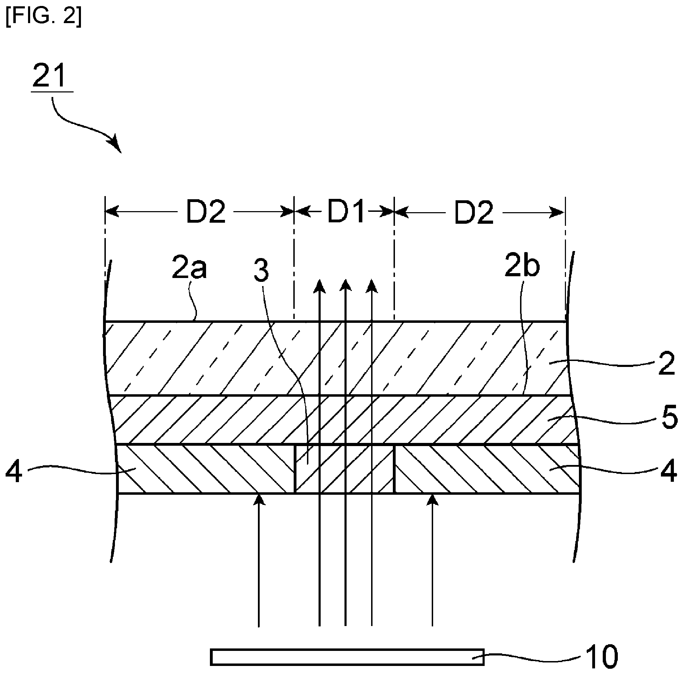

   Fig. 2 is a schematic cross-sectional view showing a cooker top plate according to a second embodiment of the present invention.

### [Description of Embodiments]

Hereinafter, a description will be given of preferred embodiments of the present invention. However, the following embodiments are merely illustrative and the present invention is not limited to the following embodiments. Throughout the drawings, members having substantially the same functions may be referred to by the same reference characters.

Herein, "cooker top plate" may be abbreviated as "top plate".

### [First Embodiment]

Fig. 1 is a schematic cross-sectional view showing a cooker top plate according to a first embodiment of the present invention.

A cooker top plate 1 shown in Fig. 1 includes a glass substrate 2. The glass substrate 2 has a cooking surface 2a and a back surface 2b. The cooking surface 2a and the back surface 2b are surfaces opposed to each other. The cooking surface 2a is a surface located on the side of the substrate where a cooking utensil, such as a pot or a frying pan, is to be put. The back surface 2b is a surface located toward the interior of the cooker and facing toward a light source and a heater. Therefore, the cooking surface 2a and the back surface 2b are front and back sides of the same substrate.

A semi-light transmissive layer 3 is disposed on the back surface 2b side of the glass substrate 2. In this embodiment, the semi-light transmissive layer 3 adjoins the back surface 2b of the glass substrate 2. The semi-light transmissive layer 3 contains a silicone resin, a color pigment, and transparent fine particles. Herein, transparent fine particles mean fine particles that satisfy the following condition. Specifically, the transparent fine particles means fine particles that exhibit, when a 10 µm thick thin film made of 10% by mass of transparent fine particles and 90% by mass of silicone resin is obtained, the property that the minimum value of the light transmittance of the thin film at a wavelength of 450 nm to 810 nm is not less than 80%. As the above-mentioned silicone resin, a methyl phenyl silicone resin having a weight-average molecular weight (Mw) of 5000 to 8000 can be used. Examples of the transparent fine particles as just described include inorganic fine particles having an average particle diameter of not more than 0.5 µm and barium sulfate is preferably used as the inorganic fine particles. For example, when a 10 µm thick thin film made of 10% by mass of barium sulfate with an average particle diameter of 0.01 µm and 90% by mass of methyl phenyl silicone resin with a weight-average molecular weight (Mw) of 7000 is formed on a glass substrate (a clear crystallized glass sheet "N-0" manufactured by Nippon Electric Glass Co., Ltd.), the light transmittance of the thin film at a wavelength of 450 nm to 810 nm as measured from the glass substrate side (the side of the glass substrate opposite to the surface thereof on which the thin film is formed) is 95%.

The above light transmittance of the thin film can be measured with a spectro-photometer (model number "V-770" manufactured by JASCO Corporation). Herein, the weight-average molecular weight (Mw) of the silicone resin can be measured using gel permeation chromatography (GPC).

Furthermore, a light-shielding layer 4 is disposed on the back surface 2b side of the glass substrate 2. In this embodiment, the light-shielding layer 4 adjoins the back surface 2b of the glass substrate 2. In the top plate 1, the light-shielding layer 4 may not necessarily be disposed on the back surface 2b of the glass substrate 2, in which case the semi-light transmissive layer 3 may be disposed, instead of the light-shielding layer 4, on the region of the back surface 2b other than a transmissive portion D1.

A light source 10 is provided below the top plate 1. The light source 10 may be constituted, for example, by an LED or a liquid crystal display device.

The top plate 1 includes: the transmissive portion D1 that transmits light from the light source 10; and a non-transmissive portion D2 that shields the light from the light source 10. The semi-light transmissive layer 3 is disposed in a region overlapped with the transmissive portion D1 in plan view. The light-shielding layer 4 is disposed in a region overlapped with the non-transmissive portion D2 in plan view.

Light from the light source 10 is emitted through the transmissive portion D1 to the outside (for example, above the top plate 1) and shielded by the non-transmissive portion D2. The transmissive portion D1 is, for example, a region where information is displayed by the light from the light source 10 when the top plate 1 is viewed in plan. Examples of the information to be displayed include information on a state of the cooker, such as information representing that the power is on and information representing that the cooker is heating. For example, by changing the shape of the semi-light transmissive layer 3 in plan view, the top plate 1 can emit, to the outside, light meeting the shape of the semi-light transmissive layer 3 in plan view and can display characters, numbers, symbols, and so on. Furthermore, the top plate 1 can display characters, numbers, symbols, and so on by passing patterned light through the transmissive portion D1. Alternatively, the top plate 1 can display characters, numbers, symbols, and so on by passing light from a liquid crystal display device through the transmissive portion D1. On the other hand, the non-transmissive portion D2 is a portion of the top plate 1 other than the transmissive portion D1 when the top plate 1 is viewed in plan. The non-transmissive portion D2 is a portion that shields light from the light source 10 to hide the internal structure of the cooker.

Since the top plate 1 has the above structure, it can obtain excellent thermal resistance and coating hardness while maintaining a suitable light transmissiveness of the transmissive portion D1 that transmits light from the light source 10.

Conventionally, a resin layer provided in a transmissive portion of a top plate may not be able to sufficiently increase the thermal resistance of the resin layer. A method for increasing the content of color pigment is conceivable as the method for increasing the thermal resistance of the resin layer. However, if the content of color pigment in the resin layer is increased, the light transmissiveness of the resin layer decreases. Therefore, the resin layer has difficulty in obtaining excellent thermal resistance and coating hardness while maintaining a suitable light transmittance.

Unlike the above, in the top plate 1 according to this embodiment, since the semi-light transmissive layer 3 (the resin layer) contains a silicone resin, a color pigment, and transparent fine particles, the semi-light transmissive layer 3 is less likely to decrease the light transmissiveness even when the content of transparent fine particles in the semi-light transmissive layer 3 is increased in order to increase the thermal resistance and the coating hardness. Furthermore, by adjusting the contents of color pigment and transparent fine particles in a state that the content of transparent fine particles in the semi-light transmissive layer 3 is increased, the semi-light transmissive layer 3 can be adjusted to a suitable light transmittance. Therefore, in the top plate 1 including the semi-light transmissive layer 3 as just described, excellent thermal resistance and coating hardness can be obtained while a suitable light transmittance of the transmissive portion D1 is maintained. Thus, a top plate meeting a desired application can be provided.

Hereinafter, a description will be given of details of the members and layers constituting the top plate 1.

### (Glass Substrate)

The glass substrate 2 is preferably a glass substrate that transmits light in at least a part of a wavelength range of 450 nm to 810 nm. The glass substrate 2 is preferably a clear glass substrate. The glass substrate 2 may be clear and colored, but is preferably clear and colorless from the viewpoint of further improving the aesthetic appearance of the top plate 1. Note that, herein, "clear" in the glass substrate 2 means that the light transmittance in a visible wavelength range of 450 nm to 810 nm is 80% or more.

The top plate 1 undergoes heating and cooling repeatedly. Therefore, the glass substrate 2 preferably has high thermal shock resistance and a low coefficient of thermal expansion. Specifically, the softening temperature of the glass substrate 2 is preferably not lower than 700°C and more preferably not lower than 750°C. Furthermore, the average coefficient of linear thermal expansion of the glass substrate 2 at 30°C to 750°C is preferably in a range of -10 × 10⁻⁷/°C to +60 × 10⁻⁷/°C, more preferably in a range of -10 × 10⁻⁷/°C to +50 × 10⁻⁷/°C, and even more preferably in a range of -10 × 10⁻⁷/°C to +40 × 10⁻⁷/°C. Therefore, the glass substrate 2 is preferably a low-expansion glass having a high glass transition temperature, such as a crystallized glass. A specific example of the low-expansion crystallized glass is a LAS-based crystallized glass "N-0" manufactured by Nippon Electric Glass Co., Ltd. A borosilicate glass substrate or the like may be used as the glass substrate 2.

The thickness of the glass substrate 2 is not particularly limited. The thickness of the glass substrate 2 can be appropriately selected according to the light transmittance and so on. The thickness of the glass substrate 2 may be, for example, about 2 mm to about 6 mm.

### (Semi-Light Transmissive Layer)

The semi-light transmissive layer 3 is disposed on the back surface 2b side of the glass substrate 2. The semi-light transmissive layer 3 adjoins the back surface 2b of the glass substrate 2. In the present invention, another layer may be disposed between the semi-light transmissive layer 3 and the glass substrate 2.

The semi-light transmissive layer 3 is a layer capable of transmitting part of light from the light source 10. The semi-light transmissive layer 3 is a layer designed so that it can transmit light upon turn-on of the light source 10 and can hide the internal structure of the cooker upon turn-off of the light source 10. The light transmittance in the semi-light transmissive layer 3 can be appropriately determined according to the usage of the top plate 1. For example, in the case where information is displayed on the transmissive portion D1 by light from the light source 10, the light transmittance in the semi-light transmissive layer 3 provided in the transmissive portion D1 may be selected to be enough to make the information displayed thereon visible upon turn-on of the light source 10. Furthermore, the light transmittance in the semi-light transmissive layer 3 provided in the transmissive portion D1 may be selected to be enough to hide the internal structure of the cooker upon turn-off of the light source 10.

### <Silicone Resin>

The semi-light transmissive layer 3 contains a silicone resin. Hitherto known silicone resins can be used as the silicone resin. The silicone resin may be used as a single type or in combination of two or more types.

From the viewpoint of further increasing the thermal resistance, the silicone resin is preferably a silicone resin having a methyl group or a phenyl group as a functional group. In this case, a methyl group may be attached directly to a silicon atom, a phenyl group may be attached directly to a silicon atom, or a methyl group and a phenyl group may be attached directly to the same silicon atom.

The weight-average molecular weight (Mw) of the silicone resin is preferably not less than 1000, more preferably not less than 2000, preferably not more than 500000, more preferably not more than 100000, and even more preferably not more than 10000. When the weight-average molecular weight (Mw) of the silicone resin is not less than the above lower limit, this is favorable because not only the thermal resistance of the semi-light transmissive layer 3 can be further increased, but also the time required for the hardening reaction of the silicone resin is not so long. When the weight-average molecular weight (Mw) of the silicone resin is not more than the above upper limit, the viscosity of a coating material (a paste for forming a semi-light transmissive layer to be described hereinafter) does not become excessively high, which makes the coating work easy.

The content of the silicone resin in the semi-light transmissive layer 3 is preferably not less than 20% by mass, more preferably not less than 30% by mass, even more preferably not less than 35% by mass, particularly preferably not less than 40% by mass, preferably not more than 70% by mass, more preferably not more than 60% by mass, even more preferably not more than 55% by mass, and particularly preferably not more than 50% by mass. When the content of the silicone resin is not less than the above lower limit, the light transmissiveness of the semi-light transmissive layer 3 can be further increased. Furthermore, when the content of the silicone resin is not more than the above upper limit, the thermal resistance and coating hardness of the semi-light transmissive layer 3 can be further increased. The content of the silicone resin is a content thereof when the total amount of materials contained in the semi-light transmissive layer 3 is assumed to be 100% by mass.

### <Transparent Fine Particles>

The semi-light transmissive layer 3 contains transparent fine particles. Herein, the transparent fine particles are a pigment different from color pigment and extender pigment. With the use of transparent fine particles, the light transmittance of the semi-light transmissive layer 3 and the thermal resistance of the top plate 1 can be increased. The transparent fine particles may be used as a single type or in combination of two or more types.

Examples of the type of the transparent fine particles include barium sulfate and glass beads.

The transparent fine particles preferably contain barium sulfate and are more preferably barium sulfate. Barium sulfate is a clear and colorless pigment. Therefore, even when the content of barium sulfate in the semi-light transmissive layer 3 is increased, the light transmissiveness of the semi-light transmissive layer 3 is less likely to decrease. Therefore, for example, the transmissive portion D1 during turn-off of the light source 10 can have a low L* value and, thus, can easily have a high jet-black appearance. Furthermore, by increasing the content of barium sulfate in the semi-light transmissive layer 3, the thermal resistance and coating hardness of the top plate 1 can be further increased.

The average particle diameter of the transparent fine particles is preferably not more than 0.5 µm, more preferably not more than 0.1 µm, even more preferably not more than 0.05 µm, and particularly preferably not more than 0.03 µm. When the average particle diameter of the transparent fine particles is not more than the above upper limit, the light transmissiveness of the semi-light transmissive layer 3 is less likely to decrease even when the content of the transparent fine particles in the semi-light transmissive layer 3 is increased. Therefore, for example, the transmissive portion D1 during turn-off of the light source 10 can have a low L* value and, thus, can easily have a high jet-black appearance. Furthermore, by increasing the content of the transparent fine particles in the semi-light transmissive layer 3, the thermal resistance and coating hardness of the top plate 1 can be further increased. The lower limit of the average particle diameter of the transparent fine particles is not particularly limited, but may be, for example, not less than 0.005 µm, in which case sedimentation and separation of the transparent fine particles can be suppressed in the process of mixing components in making a paste for forming a semi-light transmissive layer to be described hereinafter and, therefore, the productivity can be further increased.

The average particle diameter of the transparent fine particles is a median diameter derived from a volume distribution measured by a laser diffraction and scattering method.

The content of the transparent fine particles in the semi-light transmissive layer 3 is preferably not less than 20% by mass, more preferably not less than 35% by mass, even more preferably not less than 43% by mass, particularly preferably not less than 45% by mass, preferably not more than 70% by mass, more preferably not more than 65% by mass, even more preferably not more than 60% by mass, and particularly preferably not more than 58% by mass. When the content of the transparent fine particles is within the above range, the light transmissiveness of the transmissive portion D1 can be further increased and the thermal resistance and coating hardness of the top plate 1 can be further increased. The content of the transparent fine particles is a content thereof when the total amount of materials contained in the semi-light transmissive layer 3 is assumed to be 100% by mass.

When the transparent fine particles is barium sulfate, the content of barium sulfate in the semi-light transmissive layer 3 is preferably not less than 20% by mass, more preferably not less than 35% by mass, even more preferably not less than 43% by mass, particularly preferably not less than 45% by mass, preferably not more than 70% by mass, more preferably not more than 65% by mass, even more preferably not more than 60% by mass, and particularly preferably not more than 58% by mass. When the content of barium sulfate is within the above range, the light transmissiveness of the transmissive portion D1 can be further increased and the thermal resistance and coating hardness of the top plate 1 can be further increased. The content of barium sulfate is a content thereof when the total amount of materials contained in the semi-light transmissive layer 3 is assumed to be 100% by mass.

### <Color Pigment>

The semi-light transmissive layer 3 contains a color pigment. With the use of color pigment, the light transmissiveness of the semi-light transmissive layer 3 can be adjusted and the design quality of the top plate 1 can be further increased. The color pigment may be used as a single type or in combination of two or more types.

The type of the color pigment is not particularly limited so long as it is a colored pigment. Examples of the color pigment include: white pigment powders, such as TiO₂ powder, ZrO₂ powder, and ZrSiO₄ powder; blue inorganic pigment powders containing Co; green inorganic pigment powders containing Co; Ti-Sb-Cr-based or Ti-Ni-based yellow inorganic pigment powders, Co-Si-based red inorganic pigment powders; brown inorganic pigment powders containing Fe; black inorganic pigment powders containing Cu; and pearlish inorganic pigment powders.

Examples of the blue inorganic pigment powders containing Co include Co-Al-based and Co-Al-Ti-based inorganic pigment powders. An example of the Co-Al-based inorganic pigment powders is CoAl₂O₄ powder. An example of the Co-Al-Ti-based inorganic pigment powders is CoAl₂O₄-TiO₂-Li₂O powder.

Examples of the green inorganic pigment powders containing Co include Co-Al-Cr-based and Co-Ni-Ti-Zn-based inorganic pigment powders. An example of the Co-Al-Cr-based inorganic pigment powders is Co(Al, Cr)₂O₄ powder. An example of the Co-Ni-Ti-Zn-based inorganic pigment powders is (Co, Ni, Zn)₂TiO₄ powder.

Examples of the brown inorganic pigment powders containing Fe include Fe-Zn-based inorganic pigment powders. An example of the Fe-Zn-based inorganic pigment powders is (Zn, Fe)Fe₂O₄ powder.

Examples of the black inorganic pigment powders containing Cu include Cu-Cr-based inorganic pigment powders and Cu-Fe-based inorganic pigment powders. Examples of the Cu-Cr-based inorganic pigment powders include Cu(Cr, Mn)₂O₄ powder and Cu-Cr-Mn powder. An example of the Cu-Fe-based inorganic pigment powders is Cu-Fe-Mn powder.

Pearlish pigments may be used as the color pigment. The pearlish pigments that can be used are, for example, those in which the surface of an extender pigment is coated with a metal oxide, and specific examples of the pearlish pigments that can be used are those in which mica, talc, kaolin, sericite, silicon oxide, calcium carbonate, barium sulfate or the like, which are extender pigments, is used as a base material and the surface of the base material is coated with titanium oxide, tin oxide, zirconium oxide, iron oxide or the like, which are metal oxides. Among them, a pearlish pigment in which natural mica is used as a base material and the surface thereof is coated with titanium oxide is preferably used. Thus, the design quality of the top plate 1 can be further increased. These pearlish pigments may be used singly or used in combination of two or more types.

The average particle diameter of the color pigment is preferably not less than 0.01 µm, more preferably not less than 0.05 µm, preferably not more than 5 µm, and more preferably not more than 1 µm. When the average particle diameter of the color pigment is within the above range, aggregation of the color pigment is reduced. Therefore, color unevenness of the semi-light transmissive layer 3 can be effectively reduced and the color pigment of the semi-light transmissive layer 3 is less likely to protrude out from the surface of the semi-light transmissive layer 3. As a result, it can be prevented that, in assembling a cooking device using the top plate 1 or in using the assembled cooking device, surrounding parts, fingers or so on get caught on the surface of the semi-light transmissive layer 3 to peel off the semi-light transmissive layer 3.

The average particle diameter of the color pigment is a median diameter derived from a volume distribution measured by a laser diffraction and scattering method.

The content of the color pigment in the semi-light transmissive layer 3 is preferably not less than 0.1% by mass, more preferably not less than 1% by mass, preferably not more than 30% by mass, more preferably not more than 20% by mass, even more preferably not more than 15% by mass, and particularly preferably not more than 12% by mass. When the content of the color pigment is within the above range, the transmissive portion D1 of the top plate 1 can easily obtain a desired light transmissiveness. The content of the color pigment is a content thereof when the total amount of materials contained in the semi-light transmissive layer 3 is assumed to be 100% by mass.

### <Extender Pigment>

The semi-light transmissive layer 3 may contain an extender pigment. Herein, the extender pigment is a pigment different from the transparent fine particles, the color pigment, and the glass. With the use of extender pigment, the light transmissiveness of the semi-light transmissive layer 3 can be adjusted and the thermal resistance and coating hardness of the top plate 1 can be further increased. The extender pigment may be used as a single type or in combination of two or more types.

Examples of the extender pigment include talc, mica, calcium carbonate, and zirconium oxide.

The average particle diameter of the extender pigment is preferably more than 0.5 µm, more preferably not less than 1 µm, even more preferably not less than 3 µm, preferably not more than 10 µm, and more preferably not more than 7 µm. When the average particle diameter of the extender pigment is within the above range, the thermal resistance and coating hardness of the top plate 1 can be further increased.

The average particle diameter of the extender pigment is a median diameter derived from a volume distribution measured by a laser diffraction and scattering method.

The content of the extender pigment in the semi-light transmissive layer 3 is preferably not more than 20% by mass, more preferably not more than 10% by mass, and even more preferably not more than 5% by mass. If the content of the extender pigment is more than the above upper limit, the light transmissiveness of the transmissive portion D1 is difficult to increase. The lower limit of the content of the extender pigment in the semi-light transmissive layer 3 is not particularly limited without impairing the desired light transmittance in the transmissive portion D1, but is, for example, not less than 0.5% by mass. The content of the extender pigment is a content thereof when the total amount of materials contained in the semi-light transmissive layer 3 is assumed to be 100% by mass.

### <Other Details of Semi-Light Transmissive Layer>

In the semi-light transmissive layer 3, the total content of the transparent fine particles, the color pigment, and the extender pigment is preferably not less than 21% by mass, more preferably not less than 30% by mass, even more preferably not less than 35% by mass, particularly preferably not less than 40% by mass, preferably not more than 80% by mass, more preferably not more than 70% by mass, even more preferably not more than 65% by mass, and particularly preferably not more than 60% by mass. When the total content of the transparent fine particles, the color pigment, and the extender pigment is within the above range, the thermal resistance and coating hardness of the semi-light transmissive layer 3 can be further increased. The total content of the transparent fine particles, the color pigment, and the extender pigment is a content (a solid content concentration) thereof when the total amount of materials contained in the semi-light transmissive layer 3 is assumed to be 100% by mass.

In the semi-light transmissive layer 3, the content ratio of the transparent fine particles to the color pigment ((transparent fine particles)/(color pigment)) is, in terms of mass ratio, preferably not less than 1.5, more preferably not less than 3, even more preferably not less than 4, preferably not more than 750, more preferably not more than 200, and even more preferably not more than 50. When the content ratio ((transparent fine particles)/(color pigment)) is within the above range, the thermal resistance and coating hardness of the top plate 1 can be further increased while a suitable light transmissiveness of the transmissive portion D1 is maintained.

When the transparent fine particles are barium sulfate, the content ratio of barium sulfate to the silicone resin ((barium sulfate)/(silicone resin)) in the semi-light transmissive layer 3 is, in terms of mass ratio, preferably not less than 0.28, more preferably not less than 0.9, even more preferably not less than 1, preferably not more than 3.75, more preferably not more than 2, and even more preferably not more than 1.5. When the content ratio ((barium sulfate)/(silicone resin)) is within the above range, the thermal resistance and coating hardness of the top plate 1 can be further increased while a suitable light transmissiveness of the transmissive portion D1 is maintained.

So long as the effects of the present invention are not interfered with, the semi-light transmissive layer 3 may contain other components. An example of the other components is glass. However, the smaller the content of the other components in the semi-light transmissive layer 3, the better.

The thickness of the semi-light transmissive layer 3 is preferably not less than 5 µm, more preferably not less than 7 µm, preferably not more than 30 µm, and more preferably not more than 20 µm. When the thickness of the semi-light transmissive layer 3 is not less than the above lower limit, the transparent fine particles, the color pigment, and the extender pigment in the semi-light transmissive layer 3 are less likely to protrude out from the surface of the semi-light transmissive layer 3. As a result, it can be prevented that, in assembling a cooking device using the top plate 1 or in using the assembled cooking device, surrounding parts, fingers or so on get caught on the surface of the semi-light transmissive layer 3 to peel off the semi-light transmissive layer 3. Furthermore, when the thickness of the semi-light transmissive layer 3 is not more than the above upper limit, the amount of use of materials for use in forming the semi-light transmissive layer 3 can be further reduced and, therefore, the production cost of the top plate 1 can be reduced. The thickness of the semi-light transmissive layer 3 can be measured with a scanning electron microscope (SEM).

### (Light-Shielding Layer)

The light-shielding layer 4 is disposed on the back surface 2b side of the glass substrate 2. The light-shielding layer 4 adjoins the back surface 2b of the glass substrate 2. In the present invention, another layer may be disposed between the light-shielding layer 4 and the glass substrate 2.

The light-shielding layer 4 is a layer for shielding light from the light source 10. Furthermore, the light-shielding layer 4 can increase the hideability of the internal structure of the cooker. In addition, by appropriately adjusting the color of the light-shielding layer 4, the design quality of the top plate 1 can be increased. The structures of any hitherto known light-shielding layers used in top plates can be adopted as the light-shielding layer 4.

The light-shielding layer 4 contains a color pigment. The light-shielding layer 4 may be a layer containing a heat-resistant resin and a color pigment or a layer containing a glass and a color pigment, but is preferably a layer free of glass and containing a heat-resistant resin and a color pigment from the viewpoint of increasing the continuity between the light-shielding layer 4 and the semi-light transmissive layer 3 and more certainly suppressing the transmission of light through the interface between the light-shielding layer 4 and the semi-light transmissive layer 3.

### <Color Pigment>

Examples of the color pigment that can be used in the light-shielding layer 4 include color pigments described in the above chapter of the semi-light transmissive layer 3. The type of the color pigment can be appropriately changed according to the color and so on of a desired light-shielding layer 4. The color pigment may be used as a single type or in combination of two or more types.

The content of the color pigment in the light-shielding layer 4 is preferably not less than 15% by mass, more preferably not less than 20% by mass, preferably not more than 40% by mass, and more preferably not more than 35% by mass. When the content of the color pigment is within the above range, the light-shielding effect of the light-shielding layer 4 can be further increased and, thus, the hideability of the internal structure of the cooker can be further increased. The content of the color pigment is a content thereof when the total amount of materials contained in the light-shielding layer 4 is assumed to be 100% by mass.

### <Heat-Resistant Resin>

Examples of the heat-resistant resin that can be used in the light-shielding layer 4 include a silicone resin and a polyimide resin. The heat-resistant resin may be used as a single type or in combination of two or more types.

From the viewpoint of further increasing the thermal resistance of the light-shielding layer 4, the heat-resistant resin is preferably a silicone resin. Examples of the silicone resin include silicone resins described in the above chapter of the semi-light transmissive layer 3.

The content of the heat-resistant resin in the light-shielding layer 4 is preferably not less than 20% by mass, more preferably not less than 30% by mass, preferably not more than 70% by mass, and more preferably not more than 60% by mass. When the content of the heat-resistant resin is not less than the above lower limit, the thermal resistance, the solvent resistance, and the impact resistance of the light-shielding layer 4 can be further increased, and the continuity between the light-shielding layer 4 and the semi-light transmissive layer 3 can be increased to thus even more certainly suppress the transmission of light through the interface between the light-shielding layer 4 and the semi-light transmissive layer 3. Furthermore, when the content of the heat-resistant resin is not more than the above upper limit, the mechanical strength of the light-shielding layer 4 can be further increased. The content of the heat-resistant resin is a content thereof when the total amount of materials contained in the light-shielding layer 4 is assumed to be 100% by mass.

### <Glass>

When the light-shielding layer 4 contain a glass, hitherto known glasses can be used as the glass. The glass may be used as a single type or in combination of two or more types.

Example of the glass include borosilicate-based glasses, silicate-based glasses containing at least one of an alkali metal component and an alkaline earth metal component, and phosphate-based glasses containing zinc and aluminum.

The content of the glass in the light-shielding layer 4 is preferably not less than 0% by mass, more preferably not less than 10% by mass, preferably not more than 55% by mass, and more preferably not more than 50% by mass. When the content of the glass is not less than the above lower limit, the adhesion between the glass substrate 2 and the light-shielding layer 4 can be further increased. When the content of the glass is not more than the above upper limit, the stress at the interface between the glass substrate 2 and the light-shielding layer 4 caused by a difference in coefficient of thermal expansion between the glass substrate 2 and the light-shielding layer 4 can be reduced and, thus, the reduction in the mechanical strength of the top plate 1 can be further suppressed. The content of the glass is a content thereof when the total amount of materials contained in the light-shielding layer 4 is assumed to be 100% by mass.

### <Extender Pigment>

The light-shielding layer 4 may contain an extender pigment. The extender pigment is a pigment different from the transparent fine particles, the glass, and the color pigment. The light-shielding layer 4 may be a layer containing a heat-resistant resin, a color pigment, and an extender pigment or a layer containing a glass, a color pigment, and an extender pigment. The extender pigment may be used as a single type or in combination of two or more types.

Examples of the extender pigment that can be used in the light-shielding layer 4 include talc, mica, calcium carbonate, potassium titanate, calcium silicate, and titanium oxide. With the use of the extender pigment, the mechanical strength of the top plate 1 can be further increased. These extender pigments may be used singly or used in combination of two or more types.

The shape of the extender pigment contained in the light-shielding layer 4 is not particularly limited, but, for example, an extender pigment having a scaly, spherical, acicular or irregular particle shape can be used.

The content of the extender pigment in the light-shielding layer 4 is not particularly limited and may be, for example, not less than 10% by mass and not more than 50% by mass. The content of the extender pigment is a content thereof when the total amount of materials contained in the light-shielding layer 4 is assumed to be 100% by mass.

### <Other Details of Light-Shielding Layer>

So long as the effects of the present invention are not interfered with, the light-shielding layer 4 may contain other components different from the above-described components.

The thickness of the light-shielding layer 4 is preferably not less than 5 µm, more preferably not less than 7 µm, preferably not more than 40 µm, and more preferably not more than 20 µm. When the thickness of the light-shielding layer 4 is within the above range, the hideability of the interior of the cooker can be further increased.

### (Other Details of Top Plate)

The light transmittance of the transmissive portion D1 at a wavelength of 500 nm in the visible wavelength range is preferably not less than 2%, preferably not more than 90%, and more preferably not more than 80%. When the light transmittance is not less than the above lower limit, the visibility of information displayed on the transmissive portion D1 can be further increased. When the light transmittance is not more than the above upper limit, the hideability of the internal structure of the cooker in the transmissive portion D1 can be further increased.

The light transmittance of the non-transmissive portion D2 at a wavelength of 500 nm in the visible wavelength range is preferably not more than 5% and more preferably not more than 1%. When the light transmittance in the non-transmissive portion D2 is not more than the above upper limit, the hideability of the internal structure of the cooker can be further increased.

When the top plate 1 is placed, with the back surface 2b side as a bottom surface, on a black sheet and measured in terms of L* value in a L*a*b* color system at the transmissive portion D1 from the cooking surface 2a side, the L* value is preferably not more than 38, more preferably not more than 30, and even more preferably not more than 28.5. In this case, the transmissive portion D1 during turn-off of the light source 10 can have a high jet-black appearance and, therefore, the overall design quality of the top plate 1 can be further increased. The lower limit of the above L* value of the top plate 1 is not particularly limited, but may be, for example, 25.

### (Manufacturing Method)

A method for manufacturing a top plate 1 includes, for example, the steps of: preparing a glass substrate 2; applying a paste for forming a semi-light transmissive layer to a portion of the back surface 2b of the glass substrate 2 where a transmissive portion D1 is to be formed; and firing the glass substrate 2 to which the paste for forming a semi-light transmissive layer is applied. Furthermore, the method for manufacturing a top plate 1 preferably includes the step of applying a paste for forming a light-shielding layer to a portion of the back surface 2b of the glass substrate 2 where a non-transmissive portion D2 is to be formed and preferably includes the step of firing the glass substrate 2 to which the paste for forming a light-shielding layer is applied. In this case, for example, it is possible to first mask the portion of the top plate 1 where the transmissive portion D1 is to be formed, apply the paste for forming a light-shielding layer to the non-transmissive portion D2, and then apply a paste for forming a semi-light transmissive layer to the portion of the top plate 1 where the transmissive portion D1 is to be formed. Alternatively, it is also possible to first mask the portion of the top plate 1 where the non-transmissive portion D2 is to be formed, apply the paste for forming a semi-light transmissive layer to the portion of the top plate 1 where the transmissive portion D1 is to be formed, and then apply a paste for forming a light-shielding layer to the portion of the top plate 1 where the non-transmissive portion D2 is to be formed.

### Method for Forming Semi-Light Transmissive Layer:

The paste for forming a semi-light transmissive layer is a material for the semi-light transmissive layer 3 and contains the silicone resin, the color pigment, and the transparent fine particles. The paste for forming a semi-light transmissive layer preferably contains a resin binder, a solvent or like component volatilizable by heating.

The type of the solvent is not particularly limited, but examples that can be used include aromatic hydrocarbons. Among them, xylene is preferably used as the solvent. In this case, even with the use of the transparent fine particles, sedimentation and separation of the transparent fine particles can be more certainly suppressed in the process of mixing components in making the paste for forming a semi-light transmissive layer and, therefore, the productivity can be further increased.

The paste for forming a semi-light transmissive layer is applied to a specified region on the back surface 2b side of the glass substrate 2. The paste for forming a semi-light transmissive layer is preferably applied continuously and uniformly. As the method for applying the paste for forming a semi-light transmissive layer, for example, screen printing can be used. Furthermore, in this case, masking can be done by providing a mask on a screen plate for printing.

The application speed and viscosity of the paste for forming a semi-light transmissive layer can be appropriately selected according to the content of color pigment and transparent fine particles in the paste for forming a semi-light transmissive layer.

The method for manufacturing a top plate 1 may include or may not include the step of drying the paste for forming a semi-light transmissive layer. The drying temperature in the step of drying the paste for forming a semi-light transmissive layer may be, for example, not lower than 50°C and not higher than 300°C, and the drying time may be, for example, not less than 1 minute and not more than 100 hours.

Next, the glass substrate 2 with the paste for forming a semi-light transmissive layer applied thereto is fired. Thus, a semi-light transmissive layer 3 containing the silicone resin, the color pigment, and the transparent fine particles can be obtained. The firing temperature may be, for example, not lower than 100°C and not higher than 700°C. The firing time may be, for example, not less than 1 minute and not more than 100 hours.

### Method for Forming Light-Shielding Layer:

The paste for forming a light-shielding layer is a material for the light-shielding layer 4. The paste for forming a light-shielding layer may contain, for example, a glass frit and a color pigment or may contain a heat-resistant resin and a color pigment, but preferably contains a heat-resistant resin and a color pigment from the viewpoint of increasing the continuity between the obtained light-shielding layer 4 and the semi-light transmissive layer 3 and more certainly suppressing the transmission of light through the interface between the light-shielding layer 4 and the semi-light transmissive layer 3. The paste for forming a light-shielding layer preferably contains a solvent or like component volatilizable by heating. Furthermore, the paste for forming a light-shielding layer may contain an extender pigment.

The paste for forming a light-shielding layer is applied to a specified region on the back surface 2b side of the glass substrate 2. The paste for forming a light-shielding layer is preferably applied continuously and uniformly. As the method for applying the paste for forming a light-shielding layer, for example, screen printing can be used. Furthermore, in this case, masking can be done by providing a mask on a screen plate for printing.

The application speed and viscosity of the paste for forming a light-shielding layer can be appropriately selected according to the content of color pigment and extender pigment in the paste for forming a light-shielding layer.

The method for manufacturing a top plate 1 preferably includes the step of drying the paste for forming a light-shielding layer. The drying temperature in the step of drying the paste for forming a light-shielding layer may be, for example, not lower than 100°C and not higher than 700°C, and the drying time may be, for example, not less than 1 minute and not more than 100 hours.

The method for manufacturing a top plate 1 may include the step of firing the glass substrate 2 with the paste for forming a light-shielding layer applied thereto. When the paste for forming a light-shielding layer contains a glass frit, a color pigment, and an extender pigment, the method for manufacturing a top plate 1 preferably includes the step of firing the glass substrate 2 with the paste for forming a light-shielding layer applied thereto. The firing temperature may be, for example, not lower than 100°C and not higher than 1000°C. The firing time may be, for example, not less than 1 minute and not more than 100 hours.

In the method for manufacturing a top plate 1, the light-shielding layer 4 may be formed after the formation of the semi-light transmissive layer 3, or the semi-light transmissive layer 3 may be formed after the formation of the light-shielding layer 4. In the method for manufacturing a top plate 1, the paste for forming a light-shielding layer may be applied after the application of the paste for forming a semi-light transmissive layer, or the paste for forming a semi-light transmissive layer may be applied after the application of the paste for forming a light-shielding layer. The drying of the paste for forming a semi-light transmissive layer and the drying of the paste for forming a light-shielding layer may be conducted separately or conducted concurrently. The firing of the glass substrate 2 with the paste for forming a semi-light transmissive layer applied thereto and the firing of the glass substrate 2 with the paste for forming a light-shielding layer applied thereto may be conducted separately or conducted concurrently.

### [Second Embodiment]

Fig. 2 is a schematic cross-sectional view showing a cooker top plate according to a second embodiment of the present invention.

As shown in Fig. 2, a top plate 21 further includes an inorganic layer 5. The inorganic layer 5 is provided directly on the back surface 2b of a glass substrate 2. The inorganic layer 5 is provided on both a transmissive portion D1 and a non-transmissive portion D2. In the transmissive portion D1, a semi-light transmissive layer 3 is further provided on the inorganic layer 5. Furthermore, in the non-transmissive portion D2, a light-shielding layer 4 is further provided on the inorganic layer 5. As just described, in the top plate 21, the semi-light transmissive layer 3 and the light-shielding layer 4 are provided through the inorganic layer 5 on the back surface 2b of the glass substrate 2. By providing, as in the top plate 21, the semi-light transmissive layer 3 and the light-shielding layer 4 through the inorganic layer 5 on the back surface 2b of the glass substrate 2, the adhesion between the glass substrate 2 and each of the layers can be further increased. As for the rest, the second embodiment is designed in the same way as the first embodiment.

The inorganic layer 5 may be, for example, a layer containing a glass and a color pigment, a layer containing a glass and an extender pigment, a layer containing a glass, a color pigment, and an extender pigment or a layer containing a glass, a color pigment, an extender pigment, and transparent fine particles. Examples of the glass, the color pigment, the extender pigment, and the transparent fine particles that can be used include the glasses, the color pigments, the extender pigments, and the transparent fine particles, respectively, described in the above chapters of the semi-light transmissive layer 3 and the light-shielding layer 4. The inorganic layer 5 is preferably a layer having high light transmissiveness. Therefore, the content of the color pigment in the inorganic layer 5 is, for example, not less than 1% by mass and not more than 10% by mass. The content of the extender pigment in the inorganic layer 5 is, for example, not less than 20% by mass and not more than 40% by mass. The content of the transparent fine particles in the inorganic layer 5 is, for example, not less than 20% by mass and not more than 40% by mass. The respective contents of the color pigment, the extender pigment, and the transparent fine particles are contents thereof when the total amount of materials contained in the inorganic layer 5 is assumed to be 100% by mass. A heat-resistant resin may be used instead of the glass in the inorganic layer 5. In other words, a heat-resistant resin layer may be provided instead of the inorganic layer 5. The heat-resistance resins described in the above chapter of the light-shielding layer 4 can be used as the heat-resistant resin.

Also in the top plate 21, since the semi-light transmissive layer 3 (the resin layer) contains a silicone resin, a color pigment, and transparent fine particles, the semi-light transmissive layer 3 is less likely to decrease the light transmissiveness even when the content of transparent fine particles in the semi-light transmissive layer 3 is increased in order to increase the thermal resistance and the coating hardness. Furthermore, by adjusting the contents of color pigment and transparent fine particles in a state that the content of transparent fine particles in the semi-light transmissive layer 3 is increased, the semi-light transmissive layer 3 can be easily adjusted to a suitable light transmittance. Therefore, in the top plate 21 including the semi-light transmissive layer 3 as just described, excellent thermal resistance and coating hardness can be obtained while a suitable light transmittance in the transmissive portion D1 is maintained. Thus, a top plate meeting a desired application can be provided.

Hereinafter, a description will be given in further detail of the present invention with reference to examples. However, the following examples are merely illustrative. The present invention is not at all limited by the following examples.

A glass substrate below was prepared.

A clear crystallized glass sheet ("N-0" manufactured by Nippon Electric Glass Co., Ltd., average coefficient of linear thermal expansion at 30°C to 750°C: 0.5 × 10⁻⁷/°C, thickness: 4 mm)

Materials for a semi-light transmissive layer described below were prepared. The average particle diameter of each of the color pigment, the transparent fine particles, and the extender pigment is a median diameter derived from a volume distribution measured by a laser diffraction and scattering method and was measured with a laser diffraction particle size distribution measurement device (model number "Microtrac MT3000 II", manufactured by MicrotracBEL Corp.). The weight-average molecular weight (Mw) of the silicone resin was measured using gel permeation chromatography (GPC, model number "HLC-8420GPC" manufactured by Tosoh Corporation).
Silicone Resin Component:
   Methyl phenyl silicone resin (weight-average molecular weight (Mw): 7000)
   Multifunctional silicone oligomer (weight-average molecular weight (Mw): 700)
Color Pigment: Black pigment (average particle diameter: 0.1 µm)
Transparent Fine Particles:
   Barium sulfate A (average particle diameter: 0.01 µm)
   Barium sulfate B (average particle diameter: 0.3 µm)
Extender Pigment:
   Talc (average particle diameter: 5 µm)
Solvent:
   Xylene

### (Example 1 (Ex. 1))

### Preparation of Paste for Forming Semi-Light Transmissive Layer:

A silicone resin component, a color pigment, and transparent fine particles were mixed at a solid mass ratio ((silicone resin component):(color pigment):(transparent fine particles)) of 45:0.3:54.7 with a solvent, thus preparing a paste for forming a semi-light transmissive layer.

### Production of Cooker Top Plate:

The paste for forming a semi-light transmissive layer was screen-printed on the back surface of the glass substrate to have a thickness of 10 µm. Subsequently, the paste was fired at 300°C for 30 minutes, thus forming a semi-light transmissive layer and obtaining a top plate. Tables 1 and 2 describe the respective contents of components in the semi-light transmissive layer.

### (Examples 2 to 10 (Ex. 2 to Ex. 10) and Comparative Examples 1 to 3 (CEx. 1 to CEx. 3)

Top plates were obtained in the same manner as in Example 1 except that the contents and types of components in the paste for forming a semi-light transmissive layer were changed as shown in Tables 1 and 2.

### [Evaluations]

### (1) Light Transmittance

Each of the obtained top plates was measured in terms of light transmittance at a wavelength of 500 nm with a spectro-photometer (item number "V-770" manufactured by JASCO Corporation). The measurement was made from the cooking surface side of the glass substrate in the top plate.

### (2) Appearance of Top Plate (L* value)

Each of the obtained top plates was placed, with the back surface side (the semi-light transmissive layer side) as a bottom surface, on a black sheet and measured in terms of L* value in a L*a*b* color system. The L* value in the L*a*b* color system was evaluated from the cooking surface side (the opposite side to the semi-light transmissive layer side) with a colorimeter (model number "CM-600D" manufactured by Konica Minolta, Inc.).

### (3) Coating Hardness

Each of the obtained top plates was evaluated in terms of pencil hardness from the semi-light transmissive layer side in conformity with JIS K 5600-5-4.

### (4) Thermal Resistance

Each of the obtained top plates was put into an oven and heated therein at 350°C for 100 hours. Subsequently, the top plate was taken out of the oven and the state of the top plate taken out thereof was visually observed.

### <Evaluation Criteria>

- O: unchanged
- X: generation of defect, such as crack, breakage or peeling

The details and results are shown Tables 1 and 2 below.

**[Table 1]**

| | | | | Ex. 1 | Ex. 2 | Ex. 3 | Ex. 4 | Ex. 5 | Ex. 6 | Ex. 7 |
|---|---|---|---|---|---|---|---|---|---|---|
| Composition of Semi-Light Transmissive Layer | Silicone resin component | Methyl phenyl silicone resin | % by mass | 41 | 41 | 41 | 41 | 41 | 41 | 41 |
| | | Multifunctional silicone oligomer | % by mass | 4 | 4 | 4 | 4 | 4 | 4 | 4 |
| | Transparent fine particles | Barium sulfateA (average particle diameter:0.01 *µ*m) | % by mass | 54.7 | 54 | 52.4 | 51 | 48 | 46 | 45 |
| | | Barium sulfateB (average particle diameter: 0.3 *µ*m) | % by mass | 0 | 0 | 0 | 0 | 0 | 0 | 0 |
| | Color pigment | Black pigment | % by mass | 0.3 | 1 | 2.6 | 4 | 7 | 9 | 10 |
| | Extender pigment | Talc (average particle diameter: 5 *µ*m) | % by mass | 0 | 0 | 0 | 0 | 0 | 0 | 0 |
| | Total | | % by mass | 100 | 100 | 100 | 100 | 100 | 100 | 100 |
| | (Transparent fine particles)/(Color pigment) | | - | 182 | 54 | 20 | 13 | 7 | 5 | 5 |
| | (Barium sulfate)/(Silicone resin) | | - | 1.33 | 1.32 | 1.28 | 1.24 | 1.17 | 1.12 | 1.10 |
| | Pigment Concentration in Coating (Solid Content) (PWC) | | % by mass | 55 | 55 | 55 | 55 | 55 | 55 | 55 |
| Evaluations | Light transmittance(500nm) | | % | 79.0 | 59.8 | 43.3 | 25.5 | 11.8 | 6.7 | 6.3 |
| | Appearance of top plate (L* value, on black sheet) | | - | 27.9 | 28.1 | 28.5 | 27.8 | 27.8 | 28.2 | 28 |
| | Coating hardness | | - | 5H | 5H | 5H | 5H | 5H | 5H | 5H |
| | Thermal resistance (350°C × 100 hours) | | - | ○ | ○ | ○ | ○ | ○ | ○ | ○ |

**[Table 2]**

| | | | | Ex.8 | Ex.9 | Ex.10 | CEx.1 | CEx.2 | CEx.3 |
|---|---|---|---|---|---|---|---|---|---|
| Composition of Semi-Light Transmissive Layer | Silicone resin component | Methyl phenyl silicone resin | % by mass | 41 | 41 | 41 | 93 | 87 | 41 |
| | | Multifunctional silicone oligomer | % by mass | 4 | 4 | 4 | 4 | 4 | 4 |
| | Transparent fine particles | Barium sulfateA (average particle diameter:0.01 *µ*m) | % by mass | 44 | 0 | 0 | 0 | 0 | 0 |
| | | Barium sulfateB (average particle diameter: 0.3 *µ*m) | % by mass | 0 | 54.7 | 54 | 0 | 0 | 0 |
| | Color pigment | Black pigment | % by mass | 11 | 0.3 | 1 | 3 | 9 | 9 |
| | Extender pigment | Talc (average particle diameter: 5 *µ*m) | % by mass | 0 | 0 | 0 | 0 | 0 | 46 |
| | Total | | % by mass | 100 | 100 | 100 | 100 | 100 | 100 |
| | (Transparent fine particles)/(Color pigment) | | - | 4 | 182 | 54 | 0 | 0 | 0 |
| | (Barium sulfate)/(Silicone resin) | | - | 1.07 | 1.33 | 1.32 | 0 | 0 | 0 |
| | Pigment Concentration in Coating (Solid Content) (PWC) | | % by mass | 55 | 55 | 55 | 3 | 9 | 55 |
| Evaluations | Light transmittance (500nm) | | % | 3.8 | 12.5 | 5.3 | 43.0 | 6.6 | 1.1 |
| | Appearance of top plate (L* value, on black sheet) | | - | 27.7 | 37.9 | 31.6 | 28.8 | 28.1 | 46.4 |
| | Coating hardness | | - | 5H | 5H | 5H | B | B | 5H |
| | Thermal resistance (350°C × 100 hours) | | - | ○ | ○ | ○ | × | × | ○ |

As is obvious from Tables 1 and 2, the top plates in Examples 1 to 10 in which the semi-light transmissive layer contained a silicone resin, a color pigment, and transparent fine particles were confirmed to be able to obtain excellent thermal resistance and coating hardness while maintaining a suitable light transmissiveness of the transmissive portion that transmits light from the light source. On the other hand, the top plates in Comparative Examples 1 and 2 in which the semi-light transmissive layer was free of transparent fine particles exhibited insufficient thermal resistance. Comparative Example 3 containing a white extender pigment exhibited excellent thermal resistance and coating hardness, but exhibited a low light transmittance.

### [Reference Signs List]

- 1, 21: cooker top plate
- 2: glass substrate
- 2a: cooking surface
- 2b: back surface
- 3: semi-light transmissive layer
- 4: light-shielding layer
- 5: inorganic layer
- 10: light source
- D1: transmissive portion
- D2: non-transmissive portion

## Claims

1. A cooker top plate including a transmissive portion transmitting light from a light source, the cooker top plate comprising:
a glass substrate having a cooking surface on which a cooking utensil is to be put and a back surface on an opposite side to the cooking surface; and
a semi-light transmissive layer disposed on or adjacent the back surface of the glass substrate,
wherein the semi-light transmissive layer is provided in the transmissive portion, and
the semi-light transmissive layer contains a silicone resin, a color pigment, and transparent fine particles.

2. The cooker top plate according to claim 1, wherein the transparent fine particles have an average particle diameter of not more than 0.1 µm.

3. The cooker top plate according to claim 2, wherein the transparent fine particles contain barium sulfate.

4. The cooker top plate according to claim 3, wherein a content of the barium sulfate is not less than 43% by mass and not more than 60% by mass in 100% by mass of the semi-light transmissive layer.

5. The cooker top plate according to claim 3 or 4, wherein a content ratio of the barium sulfate to the silicone resin ((barium sulfate)/(silicone resin)) is not less than 0.9 and not more than 2 in terms of mass ratio.

6. The cooker top plate according to any one of claims 1 to 4, wherein
the cooker top plate includes a non-transmissive portion that shields light from the light source, and
the cooker top plate further comprises a light-shielding layer disposed on or adjacent the back surface of the glass substrate and at a location overlapped with the non-transmissive portion in plan view.

7. The cooker top plate according to any one of claims 1 to 4, wherein the cooker top plate has an L* value of not more than 30 in a L*a*b* color system when placed, with the back surface side as a bottom surface, on a black sheet and measured at the transmissive portion from the cooking surface side.

8. A method for manufacturing a cooker top plate including a transmissive portion transmitting light from a light source, the method comprising the steps of:
preparing a glass substrate having a cooking surface on which a cooking utensil is to be put and a back surface on an opposite side to the cooking surface;
applying a paste for forming a semi-light transmissive layer to or adjacent a portion of the back surface of the glass substrate where the transmissive portion is to be formed; and
firing the glass substrate to or adjacent which the paste for forming the semi-light transmissive layer is applied,
wherein the paste for forming the semi-light transmissive layer contains a silicone resin, a color pigment, and transparent fine particles.

9. The method for manufacturing a cooker top plate according to claim 8, wherein the transparent fine particles contain barium sulfate.
